(19)

Europäisches
Patentamt
European
Patent Office
Office européen
des brevets

(11) **EP 4 167 040 A1**

(12) **EUROPEAN PATENT APPLICATION**

(43) Date of publication:
**19.04.2023 Bulletin 2023/16**

(21) Application number: **22188547.8**

(22) Date of filing: **03.08.2022**

(51) International Patent Classification (IPC):
**G05B 23/02** *(2006.01)* **G06F 11/07** *(2006.01)*
**G06N 7/01** *(2023.01)*

(52) Cooperative Patent Classification (CPC):
**G05B 23/0248; G06F 11/0739; G06F 11/079;**
**G06F 11/3013; G06F 11/324; G06N 7/01;**
G05B 2219/2637

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **13.10.2021 US 202117500591**

(71) Applicant: **Garrett Transportation I Inc.**
**Torrance, CA 90504 (US)**

(72) Inventors:
• **Mracek, David**
**Torrance, 90504 (US)**

• **Klucka, Jaroslav**
**Torrance, 90504 (US)**
• **Uchanski, Michael**
**Torrance, 90504 (US)**
• **Shen, Kang**
**Torrance, 90504 (US)**
• **Felke, Tim**
**Torrance, 90504 (US)**

(74) Representative: **LKGlobal UK Ltd.**
**Cambridge House**
**Henry Street**
**Bath BA1 1BT (GB)**

(54) **FAULT MODEL EDITOR AND DIAGNOSTIC TOOL**

(57) Methods and systems for creating and modifying fault models, as well as methods and systems for generating and deploying diagnostic tools based on a fault model. The fault model may be edited in a logical and highly configurable manner based on the needs and preferences of a domain expert or other operator. The diagnostic tool can then be generated based on the fault model, and provides and enhanced process flow for use in maintenance operations.

Fig. 6

**Description**

BACKGROUND

Diagnosing faults in complex systems can be a daunting task. In the automotive context, modern vehicles are capable of generating thousands of diagnostic trouble codes (DTCs), each encoding unique data. The DTCs are generated by individual controllers (referred to as engine control units or ECU's) within a system, with each ECU linked to one or more actuators, sensors and/or other components. Due to complex relationships among the parts of an automotive system, a single component fault can cause a large number of DTCs relating to the actual fault as well as other components and subsystems.

The current method of handling DTCs is to have a technician download DTCs from the vehicle, and to then traverse through one or more manuals and service plans to eliminate potential root causes by inspection, diagnostic testing, or servicing (repair, replacement, cleaning, etc.). The technician may chase down various service steps, inspections, and/or diagnostic tests to address DTCs until a final solution is found or all DTCs are eliminated. The repeated cycle of identifying a possible service plan, performing a diagnostic test, and either performing a service repair or seeking another possible service plan is time consuming and expensive.

During the design process for a modern vehicle, design engineers build various fault models. Fault models generally contain large amounts of relations among root causes, their manifestation, repair methods, reported indicators and test steps. Some of the relations embodied in the Fault Model are characterized using statistical data, like occurrence counts and detection likelihoods. A fault model may include characterization of the cost of actions. As all these relations need to be formulated and audited by source domain engineers working with database experts. Therefore, the generation of fault models remains a difficult and very time-consuming task. Updating fault models, for example, in response to field events occurring after design processes are completed, is likewise laborious. New and alternative methods and systems for use of a Diagnostic Tool based on a well-constructed and up-to-date Fault Model are desired, and would have the effect of proving a more deterministic and predictable service experience, reducing costs and time needed during servicing.

OVERVIEW

The present inventors have recognized, among other things, that a problem to be solved is the need for new and/or alternative methods for building and editing fault models, and for deploying fault models for use in diagnostic tools.

A first illustrative and non-limiting example takes the form of a method for editing and using a fault model for an operational system comprising a plurality of components and actuators, the method comprising editing the fault model by: displaying to an operator a fault table linking failure modes, operational symptoms, diagnostic tests linked to diagnostic symptoms, and corrective actions, based on a background database of failure modes, operational symptoms, diagnostic symptoms, and likelihoods of the fault modes for each combination of operational symptoms and diagnostic symptoms; receiving from the operator a command to modify the fault table to update one or more of the likelihoods; updating the background database on which the fault table is based; generating and displaying an updated fault table to the operator; updating a diagnostic tool using the updated background database; and using the updated diagnostic tool by: receiving a set of operational symptoms; filtering possible failure modes using the set of operational symptoms; generating an ordered set of diagnostic symptoms based on the filtered possible failure modes, wherein the ordered set of diagnostic symptoms indicates which one or ones of a set of diagnostic tests are most likely to identify a true root cause of the set of operational symptoms; and displaying, to a user, the diagnostic test or tests likely to narrow the filtered possible failure modes to aid in identifying the true root cause.

Additionally or alternatively, the step of displaying to an operator a fault table is performed by showing a table having rows each corresponding to a failure mode, a first set of columns related to diagnostic trouble codes (DTCs) that can be generated by a vehicle, a second set of columns related to diagnostic tests that can be performed on a vehicle, and a column designating corrective action corresponding to the failure mode column, wherein cells of the table in the first and second sets of columns include visual indicia of a likelihood of correlation between a respective DTC or diagnostic test and the failure mode of a particular row.

Additionally or alternatively, the visual indicia may include at least three color coded degrees of correlation. Additionally or alternatively, receiving from the operator a command to modify the fault table comprises receiving a command to modify a likelihood in a cell of a particular row and column. Additionally or alternatively, receiving from the operator a command to modify the fault table comprises receiving a command to add or delete a column or a row. Additionally or alternatively, the operational system is a vehicle. Additionally or alternatively, the operational symptoms are diagnostic trouble codes.

Additionally or alternatively, the method may further comprise receiving an indication of a diagnostic test performed by the user and a result of the diagnostic test performed by the user; and either: identifying a next diagnostic test to the user, or identifying a root cause and corrective action to the user.

Additionally or alternatively, the step of displaying to an operator a fault table is performed according to a user selectable display mode, in which: a first user selectable display mode comprises displaying failure modes in a first column, and displaying operational symptoms and diagnostic tests linked to diagnostic symptoms in second and subsequent columns, by showing in each cell a correlation or likelihood relating the displayed operational symptoms and diagnostic tests for each failure mode; and a second user selectable display mode comprises displaying operational symptoms in a first column, and displaying failure modes in second and subsequent columns, by showing in each cell a correlation or likelihood relating the failure modes for each operational symptom.

Another illustrative, non-limiting example takes the form of a system configured for developing and using a fault model for an operational plant comprising a plurality of components and actuators, the system comprising: a stored instruction set for a fault model editor configured to: display to an operator a fault table linking failure modes, operational symptoms, diagnostic tests linked to diagnostic symptoms, and corrective actions, based on a background database of failure modes, operational symptoms, diagnostic symptoms, and likelihoods of the failure modes for each combination of operational symptoms and diagnostic symptoms; receive from the operator a command to modify the fault table to update one or more of the likelihoods; update the background database on which the fault table is based with the updated likelihood; and generate and display an updated fault table to the operator; a stored instruction set for a diagnostic tool updater configured to convert the background database, as updated by the fault model editor including the updated fault table, to a diagnostic tool data set; a stored instruction set for a diagnostic tool configured to: receive a set of operational symptoms from a user; filter a set of potential root causes using the set of operational symptoms; and using the likelihoods of the failure modes, generate an ordered set of diagnostic symptoms based on the operational symptoms, wherein the ordered set of diagnostic symptoms indicates which one or ones of a set of diagnostic tests are most likely to identify a true root cause of the operational symptoms; and display, to the user, the diagnostic test or tests likely to narrow a set of possible root causes based on the operational symptoms to aid in identifying the true root cause.

Additionally or alternatively, the stored instruction set for the fault model editor is configured to display the fault table by showing a table having rows each corresponding to a failure mode, a first set of columns related to diagnostic trouble codes (DTCs) that can be generated by a vehicle, a second set of columns related to diagnostic tests that can be performed on a vehicle, and a column designating corrective action corresponding to the failure mode column, wherein cells of the table in the first and second sets of columns include visual indicia of a likelihood of correlation between a respective DTC or diagnostic test and the failure mode of a particular row.

Additionally or alternatively, the visual indicia may include at least three color coded degrees of correlation. Additionally or alternatively, the stored instruction set for a fault model editor is configured to receive the command to modify the fault table by receiving a command to modify a likelihood in a cell of a particular row and column. Additionally or alternatively, the stored instruction set for a fault model editor is configured to receive the command to modify the fault table by receiving a command to add or delete a column or a row. Additionally or alternatively, the operational plant is a vehicle. Additionally or alternatively, the operational symptoms are diagnostic trouble codes.

Additionally or alternatively, the stored instruction set for the diagnostic tool is configured to: receive an indication of a diagnostic test performed by the user and a result of the diagnostic test performed by the user; and either: identify a next diagnostic test to the user, or identify a root cause and corrective action to the user.

Additionally or alternatively, the stored instruction set for the fault model editor is configured to allow a user selectable display mode, in which: a first user selectable display mode displays failure modes in a first column, and display operational symptoms and diagnostic tests linked to diagnostic symptoms in second and subsequent columns, by showing in each cell a correlation or likelihood relating the displayed operational symptoms and diagnostic tests for each failure mode; and a second user selectable display mode displays operational symptoms in a first column, and displays failure modes in second and subsequent columns, by showing in each cell a correlation or likelihood relating the failure modes for each operational symptom.

Still another illustrative and non-limiting example takes the form of a method for editing and using a fault model for an operational system comprising a plurality of components and actuators, the method comprising editing the fault model by: displaying to an operator a fault table linking failure modes, operational symptoms, diagnostic tests linked to diagnostic symptoms, and corrective actions, based on a background database of failure modes, operational symptoms, diagnostic symptoms, and likelihoods of the fault modes for each combination of operational symptoms and diagnostic symptoms; receiving from the operator a command to modify the fault table to update one or more of the likelihoods; updating the background database on which the fault table is based; and generating and displaying an updated fault table to the operator; wherein the method further comprises generating a diagnostic tool data file using the updated background database in which a set of diagnostic trouble codes (DTCs) for the operational system are identified and linked to potential failure modes by likelihoods of association between the DTCs and the potential failure modes, with a set of diagnostic tests linked to the potential failure modes for use by the diagnostic tool to parse DTCs and potential failure modes.

Additionally or alternatively, the step of displaying to an operator a fault table is performed by showing a table having rows each corresponding to a failure mode, a first set of columns related to diagnostic trouble codes (DTCs) that can be generated by a vehicle, a second set of columns related to diagnostic tests that can be performed on a vehicle, and a column designating corrective action corresponding to the failure mode column, wherein cells of the table in the first and second sets of columns include visual indicia of a likelihood of correlation between a respective DTC or diagnostic test and the failure mode of a particular row.

Additionally or alternatively, the visual indicia may include at least three color coded degrees of correlation. Additionally or alternatively, receiving from the operator a command to modify the fault table comprises receiving a command to modify a likelihood in a cell of a particular row and column. Additionally or alternatively, receiving from the operator a command to modify the fault table comprises receiving a command to add or delete a column or a row. Additionally or alternatively, the operational system is a vehicle.

Additionally or alternatively, the step of displaying to an operator a fault table is performed according to a user selectable display mode, in which: a first user selectable display mode comprises displaying failure modes in a first column, and displaying operational symptoms and diagnostic tests linked to diagnostic symptoms in second and subsequent columns, by showing in each cell a correlation or likelihood relating the displayed operational symptoms and diagnostic tests for each failure mode; and a second user selectable display mode comprises displaying operational symptoms in a first column, and displaying failure modes in second and subsequent columns, by showing in each cell a correlation or likelihood relating the failure modes for each operational symptom.

Another illustrative and non-limiting example takes the form of a method of displaying and operating a diagnostic tool for diagnosing root cause of diagnostic trouble codes (DTCs) in a vehicle, the method comprising: receiving a set of operational symptoms; filtering possible failure modes using the set of operational symptoms; generating an ordered set of diagnostic symptoms based on the filtered possible failure modes, wherein the ordered set of diagnostic symptoms indicates which one or ones of a set of diagnostic tests are most likely to identify a true root cause of the set of operational symptoms; and displaying, to a user, the diagnostic test or tests likely to narrow the filtered possible failure modes to aid in identifying the true root cause.

Additionally or alternatively, the method may further include receiving an indication of a diagnostic test performed by the user and a result of the diagnostic test performed by the user; and either: identifying a next diagnostic test to the user, or identifying a root cause and corrective action to the user.

Additionally or alternatively, the method may further include displaying alongside each diagnostic test displayed to the user, a cost of the diagnostic test and a likelihood that the diagnostic test will result in identification of root cause and corrective action without the need for a next diagnostic test.

Additionally or alternatively, the method may also include displaying, to the user, a set of most likely potential root causes and associated likelihoods for each potential root cause.

Additionally or alternatively, the method may also include receiving an indication of a diagnostic test performed by the user and a result of the diagnostic test performed by the user; and either: identifying a root cause and corrective action to the user; or adjusting the set of most likely potential root causes and associated likelihoods for each potential root cause, including at least one of adjusting a displayed likelihood or eliminating a most likely potential root cause from the displayed list.

This overview is intended to introduce the subject matter of the present patent application. It is not intended to provide an exclusive or exhaustive explanation. The detailed description is included to provide further information about the present patent application.


BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

Figure 1 shows an illustrative maintenance method in block form;
Figure 2 shows a new method for illustrative maintenance, again in block form;
Figures 3A-3B show a general diagnostic tool user interface;
Figures 4A-4B show a particular example illustrating the interface of Figures 3A-3B;
Figures 5-7 show illustrative fault model editor tools;
Figures 8A-8C show in block form illustrative methods linking the fault model editor tools of Figures 5-7 to the diagnostic tools of Figures 3A-3B and 4A-4B;
Figure 9 shows an illustrative vehicle system;
Figure 10 shows an illustrative vehicle engine system; and
Figure 11 shows an illustrative diagnostics tool.

DETAILED DESCRIPTION

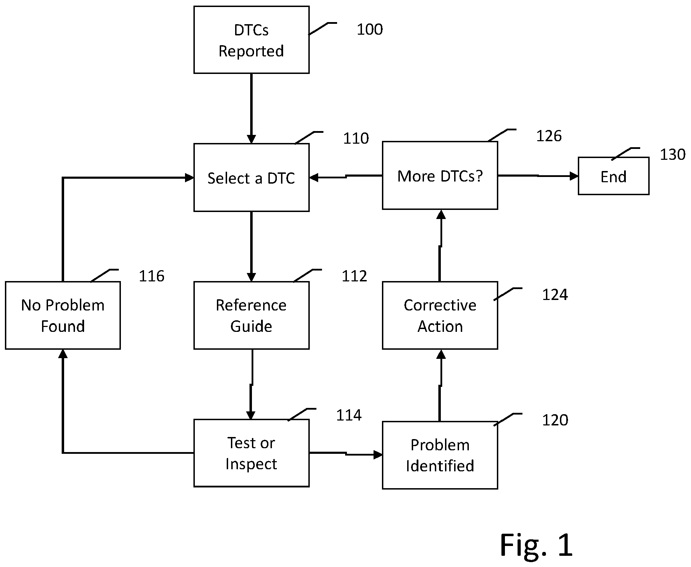

Figure 1 shows an illustrative maintenance method in block form. In this prior version of the maintenance procedure, the technician receives a set of reported diagnostic trouble codes (DTCs), such as by communication with the vehicles on-board diagnostics (OBD) controller, using known interface technologies. The technician then selects a DTC at 110, typically by reference to prior knowledge of the underlying vehicle's typical maintenance schedule, age, common problems, etc. Step 110 may be more art than science for many technicians.

The technician will then use the system's reference or maintenance guide at 112 to identify one or more tests or inspections to perform at 114. If a problem is identified at 120, a corrective action is undertaken at 124 to address the identified problem. The procedure may loop back to the beginning at block 112 if more DTCs are present, as indicated at 126 or, if all DTCs have been addressed, the maintenance visit may end at 130. If the test at 114 does not reveal a problem, as indicated at 116, the technician then must go back to block 110 and go through the procedure again, starting with a different DTC.

Even with the use of an electronic form of the reference guide at 112, such as a hyperlinked document, the user must go through various page jumps and steps to work through this process. The iterative nature of eliminating potential problems and diagnostic tests inherent in the method of Figure 1 leads to significant time spent chasing down the DTCs and diagnostic tests/inspections or other steps needed at block 114 to eliminate one potential root cause after another.

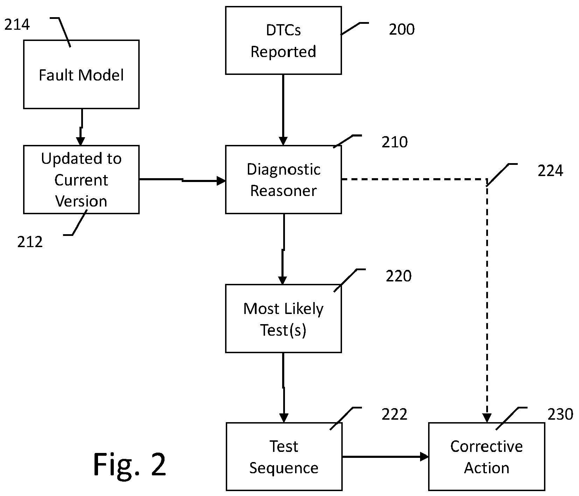

Figure 2 shows a new method for illustrative maintenance, again in block form. Here, the DTCs are reported 200 as before, but are provided to a diagnostic tool via a user interface that accesses a diagnostic reasoner 210. The diagnostic reasoner 210 will be updated to a current version from time to time as indicated at 212, based on the most recently updated fault model 214. This aspect of updating cannot be performed mentally by the technician, who simply cannot track or be kept aware of all DTCs in the underlying system and field events/updates to the fault model over time. The diagnostic reasoner 210 uses the fault model 214 to identify the most likely tests that will prove useful to advance the diagnostic effort, as indicated at 220. A test sequence is displayed to the technician at 222, who then performs one or more tests, inspections or other steps outlined by the test sequence 222. A corrective action is then identified as indicated at 230 according to the test sequence 222.

In some examples, the diagnostic reasoner may integrate cost information as well. The test sequence 222 may, for example, include the most likely tests that would address the input DTCs from 200, along with cost information allowing the technician to select the most cost-effective way to progress toward a corrective action. For example, if a particular diagnostic test (or inspection) would require time-consuming or costly disassembly of a portion the vehicle system, a different test may be performed to eliminate other root causes first.

In another example, it may be that one or more tests may be likely to aid in diagnosis; however, the cost of the tests may exceed the costs of certain corrective actions 230 that may address the underlying root cause. In some examples, a (cheap) corrective action 230 may be recommended, followed by an alternative (cheap) diagnostic test that may confirm effectiveness of the corrective action, where the combination of the corrective action and alternative diagnostic test will have lower cost than a diagnostic test that would aid in identifying root cause.

It may be that in some examples, the diagnostic reasoner 210 may identify the corrective action 230 based solely on the input DTCs and data from the fault model, without need to run additional tests using blocks 220 and/or 222. This possibility is indicated by the broken line at 224.

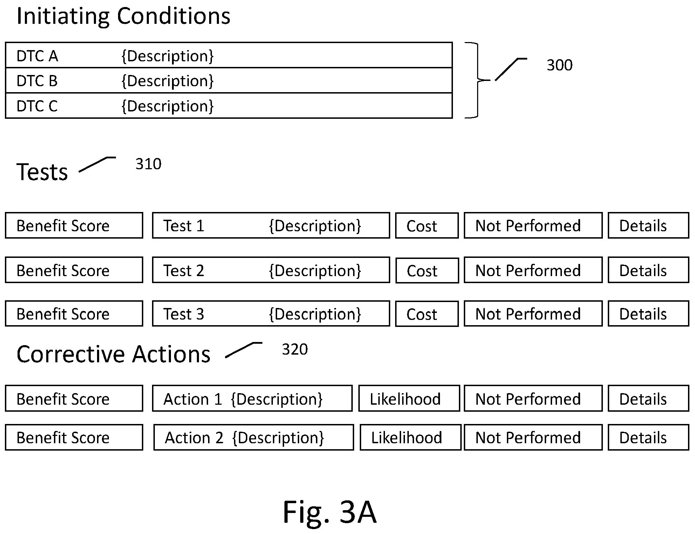

Figures 3A-3B show a general diagnostic tool user interface. The user interface is shown providing and arranging data for the user to observe, including the initiating conditions shown at 300 as a set of DTCs. In this example, a relatively small number of DTCs are illustrated; the user interface and diagnostic tool may be configured to review and sort received DTCs to highlight those that most clearly relate to underlying failure modes, and to eliminate duplicates likely to originate from or relate to the same root cause. For example, a plurality of DTCs may be generated by one component receiving faulty (such as out of range) sensing data, or receiving no data, or failing to receive acknowledgement of an output communication or request. Highlighted DTCs at 300 may be selected by reference to the combination of received DTCs, as analyzed by the diagnostic tool using inputs from the fault model.

Next, the user interface provides an ordered set of tests as indicated at 310. In this example, the tests may be ordered according to a benefit score, as shown on the far left, where the benefit score reflects a combination of elements derived from the underlying fault tree analysis. For example:

$$\text{Benefit Score} = \text{Sum}(L1, L2 \ldots LN)/\text{Scaling Factor}$$

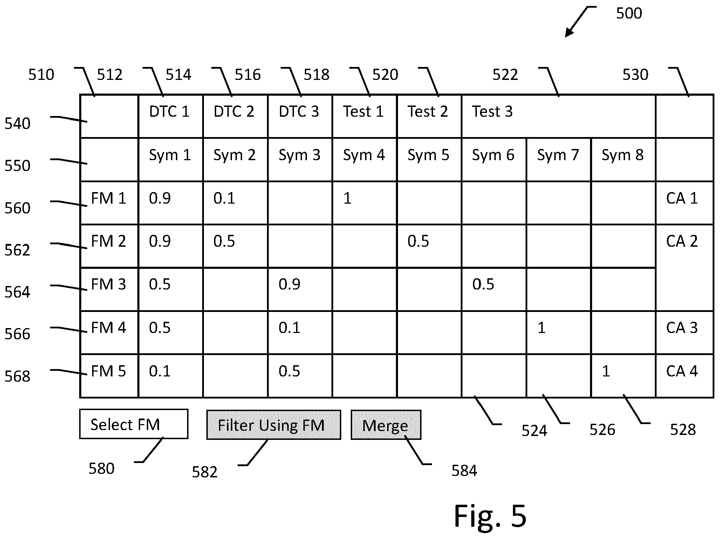

Where the likelihoods L1, L2 ... LN indicate the likelihood that the test to be performed would rule in or rule out the most likely root causes based on the input DTC. The scaling factor can be used to normalize the result; in examples shown the scaling factor puts the result in a range of 0 to 100%. Greater understanding of such likelihoods can be gained by reviewing Figures 5-7, below. Each test can be given a name and/or description, and the cost of such tests may optionally be provided as well, if desired. The status of each tests is also provided as either "Not Performed" or "Performed". If a test has been performed, the result of the test may be displayed as well, if desired. Details of the test, including instructions, can be provided as well at the far right. In some examples, the user interface may allow the user to select (by using a mouse, touchscreen, touchpad, etc.) the details block to access test instructions.

Next, the likely corrective actions given the diagnostic tool's current received data are illustrated as shown at 320. Optionally, the corrective actions may remain hidden until the diagnostic test(s) are performed. In the example shown, each corrective action has an associated benefit score, which in some examples reflects the diagnostic tools current understanding of how much benefit (that is, how many DTCs, for example) are likely to be addressed by simply taking the corrective action. In some examples, the approach shown may allow a user/technician to elect to perform a corrective action without first performing a diagnostic test. Such a course of action may be desirable to the user in the event that other maintenance rules (such as an actuator, filter or seal having reached end of useful life according to time in service, or the system being due for a particular service such as replacement of a fluid) indicate the need to perform one or more listed corrective actions regardless the presence of a fault.

The corrective actions may also be listed with description of each such action, the likelihood based on the diagnostic tools currently available information that a particular corrective action will be needed, and whether the corrective action has been performed. As with the tests 310, the corrective actions 320 may be shown with selectable details icons that allow the user interface to display the details of the corrective action, including instructions, as needed.

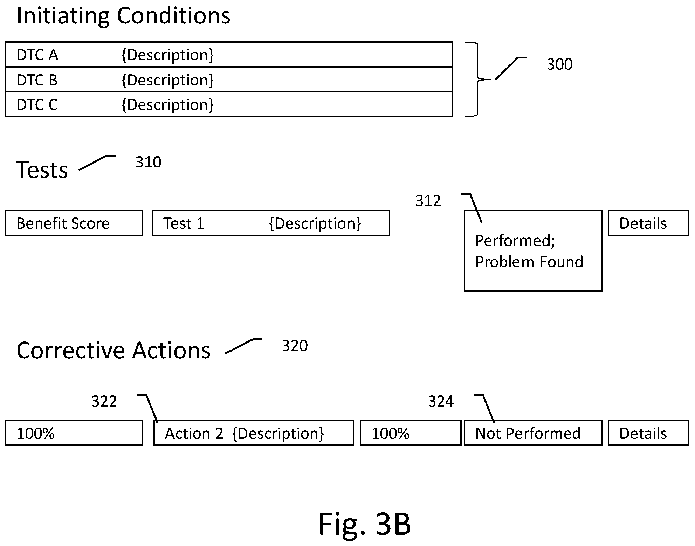

Figure 3B illustrates a next screen that may follow that shown in Figure 3A after a particular test has been selected and performed by the user. Here, the user has accessed the field shown at 312 to indicate that the test described as been performed, and the user enters a result of the test. The "result" as entered may be, for example, a qualitative result (such as pass/fail), or it may be a quantitative input, as desired and dependent on the particular test performed. The data to be entered in block 312 may be specified by the diagnostic tool relying on the fault model data entered during the design/updating procedure described below. The user interface is then updated by the diagnostic tool to narrow the presented set of corrective actions 320 to the one shown at 320 that correlates to the outcome of the applied test. The status remains "Not Performed" until that field 324 is updated by the user. As can be seen, the benefit and likelihood blocks are both updated in this example to 100%, indicating the diagnostic tool's certainty with respect to the corrective action.

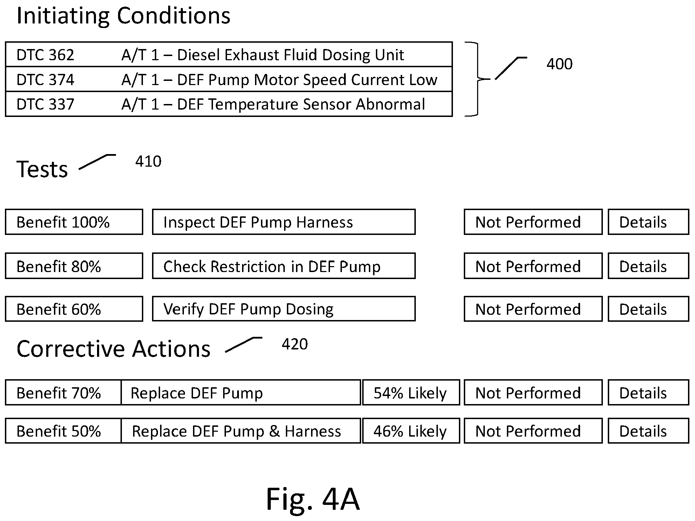

Figures 4A-4B show a particular example illustrating the interface of Figures 3A-3B. A set of DTCs have been received as indicated at 400. Here, the user interface focuses on DTCs that relate to the diesel exhaust fluid (DEF) dosing unit, and three DTCs indicating some issue related to the DEF dosing unit are displayed. The set of DTCs shown may be selected by the diagnostic tool from a larger set of DTCs either by eliminating those that are likely redundant to the ones shown, or by presenting a subject-matter focus for the user. That is, there may be additional DTCs reported that are unrelated to the DEF, and those may be hidden from this particular screen view in order to focus on a single part of the system first. Remaining DTCs related to other system components may be addressed in subsequent screens.

Possible tests that can be performed at shown at 410. In the specific DEF example shown, an inspection is shown as having the highest benefit, with more complex tests (checking for a restriction and verifying pump dosing may take more effort/cost/time than the inspection listed first, for example). The likely set of corrective actions is shown at 420, including a lesser process and a greater process, with benefit scores and likelihood listed for each, as desired.

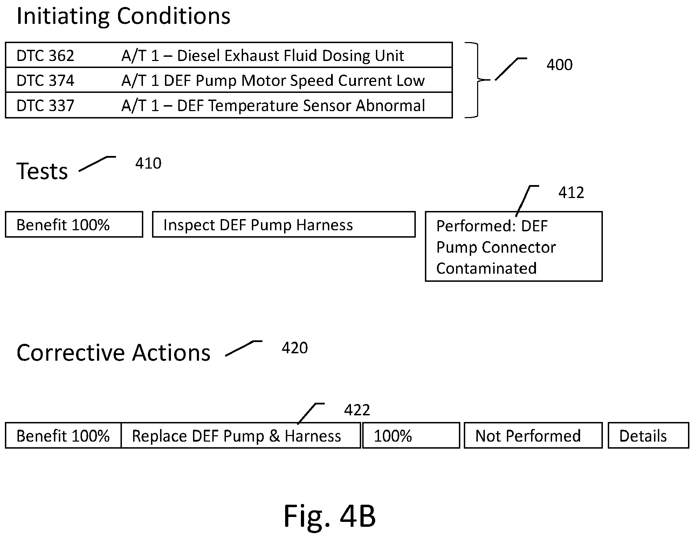

Figure 4B shows a next screen. The initiating conditions are again shown at 400. One of the tests 410 has been performed, as indicated by the update at 412. The user in this instance may be provided the option of selecting various specific test entries, or may have a free text field to use, as desired. In some examples, the user may be given several text-based entries to select from. Here, the user has updated the inspection test as shown at 412 to indicate that the DEF pump connector is contaminated. The user interface, based on the underlying diagnostic reasoner which in turn refers to the fault model, is updated to identify a corrective action plan as shown at 422.

Figures 5-7 show illustrative fault model editor tools. The user interface for a fault model editor is shown at 500. The user interface may be a computer screen, a touch screen, etc., and may be accessed using a mouse, trackpad, keyboard, etc., as desired. The fault model editor displays data in columns and rows. In the arrangement shown, a first column 510 displays several failure modes. The next three columns 512, 514, 516, display unique DTC information. The next columns at 518, 520 show two diagnostic tests. A third diagnostic test is shown at 522, spanning three columns 524, 526, 528 that each represent different outcomes of the diagnostic test 522. The final column at 530 lists several corrective actions that are available, where the corrective actions in column 530 address the failure modes from the first column 510, though not necessarily uniquely. The top row 540 provides text identification of the DTCs and Tests, and the second row 550 lists symptoms, such that the table as shown separately lists 8 symptoms that can be associated with the three DTCs and three tests. As used in the table and in several examples herein, a "test" may be a diagnostic test or an inspection, as desired. The next five rows 560, 562, 564, 566, 568 list five failure modes FM 1, FM 2, etc.

The illustration is shown in a filtered format, as there may be hundreds or thousands of DTCs, any number of tests, and hundreds or thousands of failure modes. In the example shown, the user has been allowed to select or deselect failure modes, limiting the view to those shown, by clicking or otherwise selecting icon 580. The user can then select a filter icon shown at 582 to filter the displayed tests and DTCs to those shown which have data related to the set of failure modes. The user may also simplify the view by enabling a merge icon, allowing test 3 to be merged as shown at 522, and allowing CA 2 (corrective action 2) to be merged for failure modes 2 and 3, as shown in rose 562, 564.

Alternatively, the same view can be obtained within the larger fault model by selecting DTC 1, at 512, and requesting to filter according to the symptom linked to DTC 1, such that all the failure modes to which the particular symptom can apply are shown in a single view. The select and filter icons shown at 580, 582 may be modified by the user, such as by a "right click" on either icon, to change the nature of selection or filtering performed.

Numbers and blanks are shown in a set of "data" cells forming the middle portion of the table, that is, for the rows 560, 562, 564, 566, 568, data is provided in each symptom column, as shown. For simplicity of viewing, zeros are presented as blanks. The numbers illustrated represent the likelihood that a particular failure mode is present in view of a particular symptom. For example, when symptom 1, corresponding to DTC 1 in row 512, is present, there is a 90% likelihood that either of failure modes 1 or 2 (rows 560, 562) is present, a 50% likelihood that either of failure modes 3 or 4 (rows 564, 566), and a 10% likelihood that failure mode 5 (row 568) is present. The fault model editor allows the operator, who may be a domain expert, to directly modify the likelihoods shown.

Because DTC 1 is associated with a non-zero likelihood of at least the five failure modes shown, additional data would be needed to decipher which of the failure modes is in fact present. Further DTCs may be referenced in the example shown. For example, if DTC 2 (column 514) occurs, symptom 2 is also present, adding more data. The absence of DTC 3 (column 516), combined with the presence of DTC 2, eliminates three of the failure modes (FM 3, FM 4, FM 5, at rows 564, 566, 568) from the analysis. Now the operator can readily see that what would remain is to perform either test 1 or test 2, with test 1, representing symptom 4 at column 518, providing a positive identification of FM 1, and test 2 being useful to identify FM2 as likely. From the perspective of the fault model editor, the operator can use the interface shown to quickly understand which DTCs and Tests, each of which represent symptoms in the analysis, are captured in the fault model for identifying each of the failure modes. Moreover, the operator is enabled to directly modify the content of the cells using domain knowledge to build and/or update the fault model.

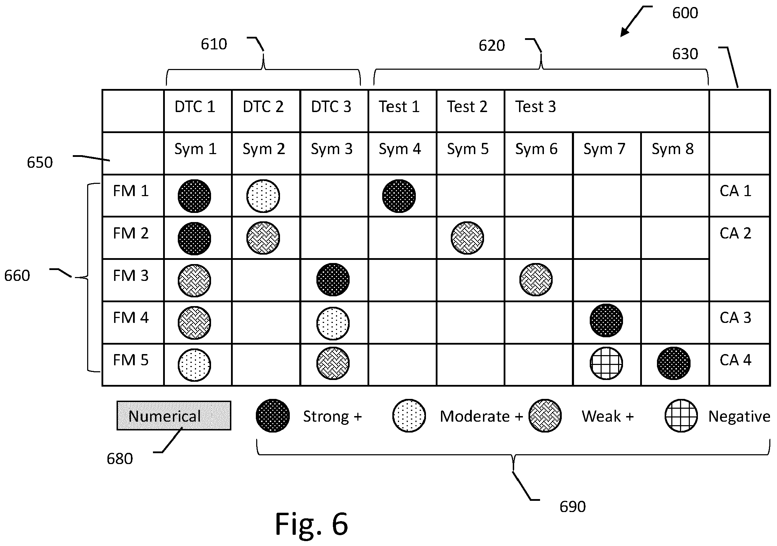

Figure 6 shows another example of the fault model editor. Similar data is shown as in Figure 5, with the display 600 showing DTCs 610 and tests 620 as symptoms 650, and several rows of failure modes 660 and corresponding corrective actions 630. In this example, pattern coding is shown, with the numbers replaced with a set of pattern codes shown at 690. Rather than pattern codes 690, color codes may be used. In one example, strong correlation may be shown as dark red, moderate correlation as light red, and weak correlation as a black circle. An additional element is shown here by the inclusion of a negative correlation coding, which may be understood as indicating that the cell value may be zero or blank. In the example, when test three is performed, if symptom 7 (a particular test result) occurs, this may rule out FM 5, in the example shown, while ruling in FM 4. Other color or pattern coding may be provided. The view may be toggled by selecting icon 680, optionally, to show the underlying numbers.

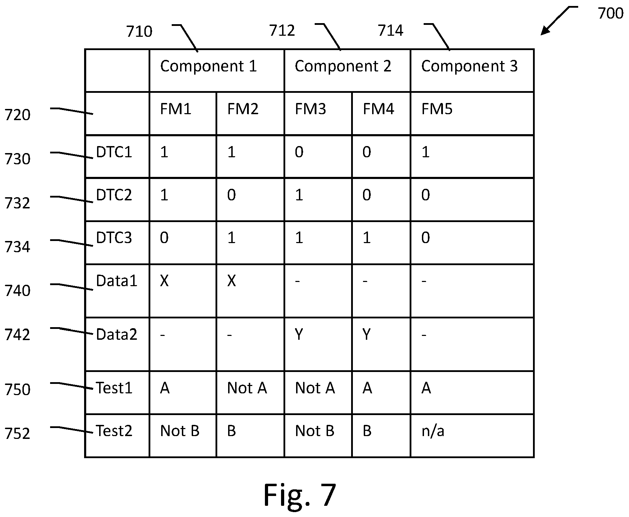

The views shown in Figures 5 and 6 are arranged with failure modes and linked corrective actions defining each row. The user may be allowed to switch or rearrange the view. Figure 7 shows an example in which the data is arranged relative to a set of selected components. As shown, the user has filtered the components on display to three particular components 710, 712, 714. A set of failure modes related to each component is listed below the component names, as indicated at 720. The DTCs that can indicate the particular failure modes are indicated at 730, 732, 734, where a 1 in each cell indicates that the presence of the failure mode would trigger the DTC to be generated, and a 0 indicates that the DTC may be present or absent regardless of whether the failure mode is present. The user may be provided the option to switch views to indicate the predictive value of the DTC as it relates to the particular component. That is, the user may toggle between a first view in which the expected presence of the DTC assuming that a particular failure mode occurs is shown, and a second view in which the predictive value of the DTC indicating the occurrence of a particular failure mode is shown. By doing so, the domain expert is allowed to perform two distinct tasks. The first is entering data that indicates what pattern or combination of DTCs would be expected to occur when a failure mode is present, which can be used by the diagnostic reasoner to rule failure modes in or out based on a set of DTCs received from a vehicle. The second is entering data that provides a technician in the field to determine the most likely failure mode among those that are possible based on a set of DTCs.

The table may further include data fields as shown at 740, 742. Figure 7 also shows that one or more tests can be listed at 750, 752 for further parsing the failure mode following analysis of DTCs.

The data fields 740, 742 may comprise, for example, aging or component health data. For example, an actuator may be rated for a certain number of actuations within its useful life. The older the actuator is, the more likely it may be to fail. In addition, the cost of a repair or replacement of an aged actuator can be treated as lower than the cost of replacing a new actuator, since the aged actuator is closer to its end-of-life threshold. Component health may also be monitored, as is known in the art, by comparing component operation to its beginning of life status. In an example, the data fields 740, 742 may set thresholds to be used in the diagnostic reasoner to, for example, modify calculated likelihoods and/or costs. For example, a data field 740 may define the end-of-life age or quantity of actuations of a component.

When deployed to a diagnostic tool, the diagnostic tool can then obtain component age data from the vehicle for comparison to the stored end of life threshold. That information, in turn, can be used by the diagnostic tool to modify the likelihood indications presented to the technician/user, or ordering of diagnostic tests to be performed, to account for the age of the component.

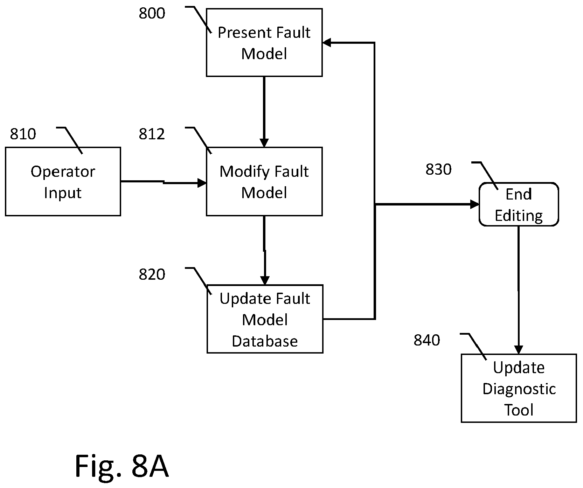

Figures 8A-8C show in block form methods linking the fault model editor tools of Figures 5-7 to the diagnostic tools of Figures 3A-3B and 4A-4B. Figure 8A shows a first example. Here, the fault model is presented to the operator, as indicated at 800. The operator provides input as indicated at 810, and the software/computer then updates the fault model, as indicated at 812. The underlying database for the fault model is then updated, as indicated at 820. The process of blocks 800, 810, 812 and 820 may repeat for any desired number of iterations. Once the operator indicates completion, the editing ends as indicated at 830. The diagnostic tool can then be updated as indicated at 840.

Updating the diagnostic tool 840 may include modifying stored variables, adding or deleting DTC, test, components, failure modes, corrective actions, likelihoods, and combinational data as described previously. The diagnostic tool itself can be built and/or modified by the following procedure:

define DTC combinations to rule out failure modes;
for remaining failure modes, identify likelihoods of occurrence of each failure mode;
adjust likelihoods of occurrence for each remaining failure mode using available DTC combinations, including user inputs linking DTCs to failure modes;
(optionally) identify parameters for adjusting likelihoods of occurrence for relevant failure modes using component health, age, and/or usage characteristic data; and
link tests to each failure mode for parsing remaining failure modes, including cost and likelihood of test succeeding in pinpointing actual failure;

Through this process, the data is configured for the diagnostic tool such that when a set of DTCs and/or other additional vehicle data is input to the diagnostic tool, the diagnostic tool can then parse the DTCs, narrow the failure modes to present to the user, and provide an ordered list of the failure modes and tests as shown in Figures 3A-3B and 4A-4B. The procedure may include transferring the loadable diagnostic information (LDI) for the underlying system or vehicle, for example. The processes shown may be performed, for example and without limitation, on a general purpose computer of any footprint and type. Machine executable instructions for these steps may be stored in suitable tangible media, such as RAM, ROM, Flash, etc. Once the diagnostic tool is regenerated, it can then be deployed as part of block 840 by, for example, communicating software updates to diagnostic tools in use at maintenance facilities via the Internet or by distribution of hardware (memory sticks/thumb drives, for example).

Some examples may take the form of methods for editing and using a fault model for an operational system. The fault table can be presented at block 800, displaying a table linking failure modes, operational symptoms, diagnostic tests linked to diagnostic symptoms, and corrective actions, based on a background database of failure modes, operational symptoms, diagnostic symptoms, and likelihoods of the fault modes for each combination of operational symptoms and diagnostic symptoms. The operator input can be received at block 810 via a command, such as a text or other entry to modify the fault table to update one or more likelihoods at 812. Block 812 may also include deleting or adding a failure mode, an operational symptom, a diagnostic test and diagnostic symptom, and/or a corrective action, as desired. Data may be presented in the fault table using, for example, the column and row configuration discussed previously, as well as numerical or color coded likelihood indicia. The user may be allowed to toggle the display between numerical or color coded likelihoods, and to rearrange the table using different data in the rows/columns, as desired. The background database on which the presented fault table is based is then updated at 820, and the method cycles back to 800 to generate and display the updated fault table. When editing is completed at 830, the diagnostic tool can be updated at 840 using various methods. The diagnostic tool may be directly updated in an integrated system where both the fault model and the diagnostic tool are controlled by the same entity.

In other examples, a third party diagnostic tool may be used. When a third party diagnostic tool is being used, the updated data from the fault model editor can be packaged as a diagnostic tool data file to be exported to the third party diagnostic tool. The diagnostic tool data file may include, for example and without limitation, a set of diagnostic trouble codes (DTCs) for the operational system are identified and linked to potential failure modes by likelihoods of association between the DTCs and the potential failure modes, with a set of diagnostic tests linked to the potential failure modes for use by the diagnostic tool to parse DTCs and potential failure modes.

In a system example, the system may comprise stored instruction sets for the different operations in a single system, or there may be separate computers storing the instruction sets for the fault model editor and the diagnostic tool. For example, a first system may comprise a processor and associated memory storing an instruction set for a fault model editor, as well as a stored instruction set for a diagnostic tool updater. A second system (or a plurality of second systems) may then store the diagnostic tool itself. For example, there may be one fault model editor accessible by quality system personnel and engineers who serve as the operators for the fault model editor. A deployment system, such as a server that can access and upload parameters to a distributed set of diagnostic tools, may be the diagnostic tool updater, storing the diagnostic tool updater and having access to the database that the fault model editor configures. Alternatively, the deployment system may receive the diagnostic tool data file exported by the fault model editor. The distributed diagnostic tools can then be updated either by communication with the fault model editor or with the deployment system server.

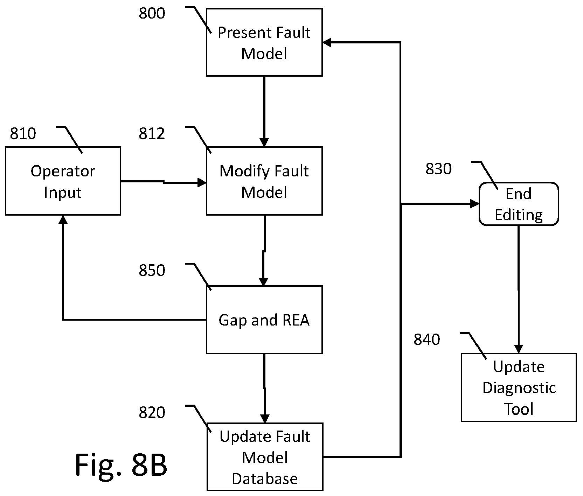

Figure 8B shows a further method. Here, blocks 800, 810, 812, 820, 830 and 840 are generally the same as described in Figure 8A. An additional step is shown at 850, where gap analysis and ripple effect analysis (REA) are performed as the fault model is modified, as indicated at 812. Block 850 may be moved out of the process loop as shown and placed before block 830, if desired, to allow the operator to complete all modifications prior to the gap analysis and REA.

In an example, the gap analysis can be performed by analytically grouping the DTCs and their linked failure modes to determine whether combinations of input DTCs would be directed to a single or to multiple failure modes. If a combination of input DTCs leads to multiple failure modes, the gap analysis proceeds to determine whether tests are defined in the fault model to enable the multiple failure modes to be parsed to a single failure mode. A gap would then appear if the analysis shows that a given set of DTCs would flag multiple failure modes and the tests defined in the fault model fail to provide sufficient guidance to lead to a single failure mode. If a gap appears, the operator can be alerted and input is requested. Such input may be, for example and without limitation, the operator indicating that the result is desirable (that is, it may be that a particular combination of DTCs and tests indicate plural failure modes), or to provide an additional test or other data allowing the diagnostic tool to further parse the multiple failure modes.

REA at block 850 may include tracking the data presented to the user during the modification process to ensure that the operator is made aware of the impact of changes made. For example, if the operator modifies, adds, or removes a test or a DTC while observing a set of failure modes, and that test or DTC is used in other parts of the fault model to assess failure modes outside of the set being observed, there may be an unforeseen ripple effect of the change.

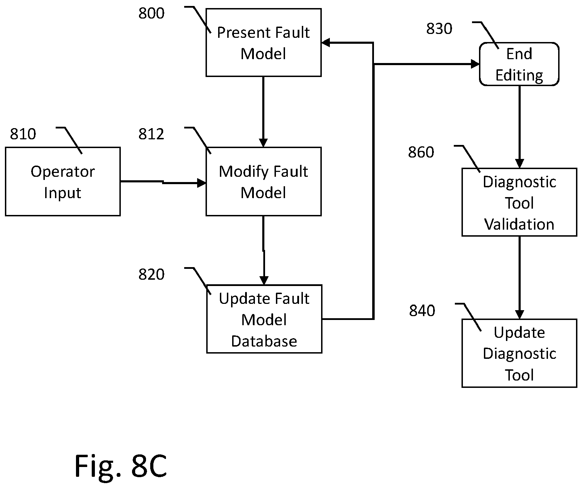

Figure 8C shows another example. Blocks 800, 810, 812, 820, 830, and 840 are as described above with reference to Figure 8A. Here, an additional step is provided at 860 where the diagnostic tool is validated prior to updating steps at 840. During such validation at 860, the fault model updates that have been made at 810/812/820 are implemented in a pseudo diagnostic tool to again check for gaps or impossibilities in the resulting tool. Gaps may be identified by determine whether combinations of input DTCs lead to ambiguous results (multiple failure modes presented by the diagnostic tool without tests capable of parsing the failure modes). The analysis for gaps can be similar to that noted above. Validation at 860 may be performed, in an example, on the basis of defined test cases, where a set of input DTCs and test results are provided to the pseudo diagnostic tool and it is observed whether the pseudo diagnostic tool reaches an intended result.

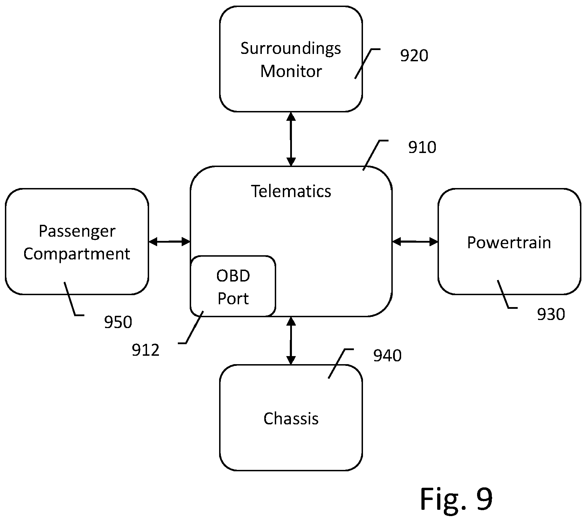

Figure 9 shows an illustrative vehicle system. The vehicle may be, for example and without limitation, a car, truck, train, airplane or boat. The illustrative system includes a telematics unit 910 which interfaces with several illustrative vehicle subsystems. A surroundings monitor subsystem (SMS) is shown at 920 and may include further subsystems such as, for example and without limitation, camera, LIDAR, and/or radar systems. The SMS may further include subsystems for driver assistance and/or autonomous control over the vehicle, if desired. A powertrain subsystem is shown at 930 and may include, for example and without limitation, additional subsystems for monitoring and controlling actions related to fuel, airflow, engine, and/or transmission. The powertrain subsystem 930 may incorporate an internal combustion engine (diesel, gasoline or other fuel), an electric motor, a hybrid combustion/electric system, or any other power generation system. A chassis subsystem is shown at 940 and may include, for example and without limitation, still further subsystems such as stability control, tire monitoring, steering, brake controls, etc. A passenger compartment subsystem may be included as shown at 950 and may include, for example and without limitation, infotainment, heating, ventilation and air conditioning (HVAC), comfort and passenger restraint subsystems. In some examples, each subsystem may have its own controller, such as by provision of an electronic control unit (ECU) in the form of a microcontroller, microprocessor, or state machine, along with associated memory for storing data and machine-readable instruction sets in, for example, any suitable non-transitory media, and other circuitry as needed, such as logic or signal processing circuits, for example. An ECU may be referred to as an engine control unit for some subsystems.

The telematics unit 910 may include a microprocessor or microcontroller, or other control circuitry (such as a state machine), various logic circuitry, and a memory for storing operational instruction sets as well as for storing various data, as further detailed below. The telematics unit 910 may be operatively linked to an on-board diagnostics (OBD) port that a technician may plug into with an external diagnostics computer to download information from the system. Such a port may be a standardized or non-standard interconnection, such as using any of various OBD standard forms, USB, Ethernet, other electrical, optical coupling, or any other suitable coupling. Rather than a physical port 912, some systems may use a wireless connection (Bluetooth, WiFi, cellular 4G or 5G, etc.).

Interactions among these various blocks 910, 920, 930, 940, 950 may take place via wired or wireless connections, using one or more busses for example, and may include a range of different signal types. One solution in vehicles is the use of the Controller Area Network (CAN) Bus architecture. In an example, each CAN Bus node includes a central processor, a CAN controller, and a CAN transceiver as defined by ISO 11898 and its various subparts. The overall system, as well as each subsystem, may be designed and/or defined in accordance with electrical map(s) of electrical componentry and connections therebetween, as well as being designed and defined in accordance with communication map(s) that define senders and receivers of signals and lines or links among the senders and receivers. Several components may participate in each of "communication" and "electrical" networks and maps.

The present invention is not limited to the CAN Bus architecture, and its use is described for illustrative purposes. Some examples may incorporate more than one communication structure, standard or type, such as by having a CAN Bus coupling select subsystems, while one or more additional elements are including using, for example, an Ethernet connection. For example, a digital video camera may couple via Ethernet to one or more ECUs. The digital video camera would be part of the communication mapping when it communicates the digitized signals it captures on the Ethernet, and part of the electrical mapping when it obtains power to perform its image capture activities. Wireless connections, such as Bluetooth, WiFi, and/or cellular transmission capabilities may be included as well.

Placed in context, a vehicle system may generate a plurality of diagnostic trouble codes (DTCs) when errors occur. DTCs related to the electrical system are distinct from those of the communications system. A DTC in the communication system will be at least one layer of abstraction away from those of the electrical system. For example, a DTC in the communication system generally relates to a lack of information. Supposing a system having two ECU nodes, ECU-A and ECU-B, a DTC in the communication system generated by ECU-B may be "missing message from ECU-A," or "failure of checksum for message from ECU-A." The DTCs generated in the communication system aid in identifying which node or connection in the communication system is at fault. However, troubleshooting is limited as the root cause of the DTC cannot be discerned from the communication system alone.

The DCTs issued within the electrical system will present observations of what is happening, or not happening, within the electrical system. For example, an electrical system DTC may simply observe that an actuator did not open or close in response to a command to do so. If a communication system error is the actual fault, there may be many electrical DTCs generated without any indication of the true source of the issue. For example, a dozen actuators may be linked to electrical system DTCs in the event of a communication system error. Methods and systems that enable better triangulation of the actual error are desired.

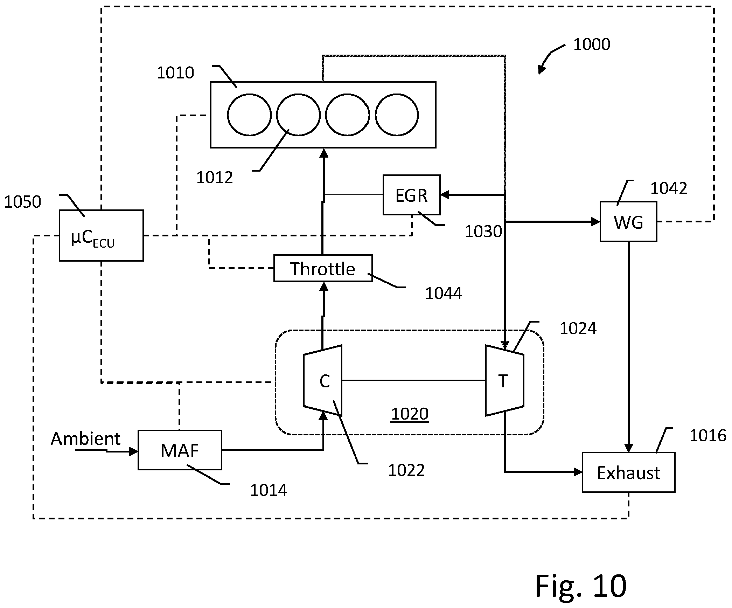

Figure 10 shows an illustrative engine and associated airflow system, and may be one of the subsystems within block 930 of Figure 9. The overall system is shown at 1000, with an engine at 1010 having a plurality of cylinders 1012. Air going into the engine 1010 is received through an air filter and (optionally) monitored by a mass air flow (MAF) sensor 1014. Incoming air then flows to a compressor 1022, which compresses the air to an increased pressure to improve engine power and efficiency. The air passes through a throttle 1044 to the intake manifold of the engine 1010. A charge air cooler may also be provided between he compressor 1022 and the engine 1010. The compressor 1022 is shown as part of a turbocharger 1020, which also include a turbine 1024 placed in the exhaust gas airstream coming out of the engine 1010. The turbine 1024 uses exhaust gas pressure to turn the compressor 1022. A wastegate (WG) 1042 is provided to bypass the turbine 1024 by directing exhaust gasses to the exhaust 1016, allowing regulation of the turbine 1024 (and hence compressor 1022) speed. The exhaust 1016 may include exhaust treatment devices and one or more sensors to detect constituents of the exhaust gasses. An exhaust gas recirculation (EGR) valve is shown at 1030 and may be used to supply exhaust gasses back to the engine input, useful to reduce certain emissions.

An airflow ECU is shown at 1050 and indicated as a microcontroller. The airflow ECU 1050 monitors and controls operations of the various elements shown, including controlling associated valves, and actuators, as well as obtaining readouts from numerous sensors in the system. For example, some sensors will detect conditions in the airstream (temperature, pressure, mass flow, presence of contaminants, etc.), and other sensors may be placed to observe whether various actuators are in fact working. In addition, the connections shown may include control lines. For example, connection to the WG 1042 may include an electrical control connection to control an actuator that opens and closes the valve for the WG 1042. More than one ECU may be present. For example, some systems may have a dedicated microcontroller for the turbocharger 1020.

The ECU 1050 can be seen as connected to the engine 1010, the MAF sensor 1014, the exhaust 1016, the turbocharger 1020, the EGR 1030, the RCV 1040, the WG 1042, and the throttle 1044. The connections shown would be part of the electrical map, while the airflow ECU 1050 is also a node on the communications map, for example coupling in turn to a CAN Bus.

As can be appreciated, the signals passing back and forth within the system are subject to a variety of potential failures. For example, returning to the WG 1042, when the airflow ECU 1050 generates a control signal indicating that the WG 1042 is to open, the airflow ECU 1050 may observe whether the sensors associated with the WG 1042 indicate changes to actuator position. The airflow ECU 1050 may use a model of system airflow to characterize expected changes other operating characteristics (such as intake manifold air pressure, or exhaust 1016 pressure/temperature), providing the ability to determine whether a requested change to WG 1042 position results in desired or expected changes in operating characteristics. If the airflow ECU 1050 does not receive a signal indicating direct observation of WG 1042 position change, or does not observe expected effects of such an expected change, the airflow ECU 1050 may generate one or more DTCs. It may be that an actuator failed, or a signal to the actuator was not received, or a sensor associated with the actuator failed to accurately detect actuation or other change, or a signal issued by the sensor was not issued or received. Each such failure may be the result of a different root cause. The airflow ECU 1050, will generate one or more DTCs. The DTCs, as they relate to the components shown in Figure 10, including actions by those components and their connection to the airflow ECU 1050 would be electrical DTCs. When the airflow ECU 1050 communicates to other nodes of the communication system, any errors observed in such communications would appear as communication DTCs.

For maintenance purposes, the DTCs generated by each ECU in the vehicle are recorded over time by each subsystem. At the point of maintenance, these DTCs can be downloaded by a technician using a service tool plugged into the vehicle OBD port (Figure 9, at 912), or using over-the-air transmission. Historically, a technician would then perform a process as shown above in Figure 1 to parse the DTCs and investigate root cause before taking corrective action.

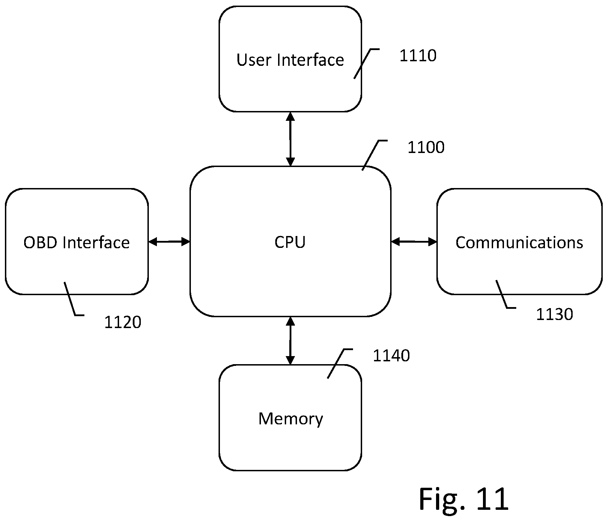

Figure 11 shows an illustrative diagnostic tool. The diagnostics tool is based on a central processing unit (CPU) 1100, which may be a general-purpose processor or a custom build, as desired. The CPU 1100 interacts with the user via a user interface 1110, such as a screen, touchscreen, keyboard, mouse, etc. The user interface 1110 may present to the user screens including those illustratively shown above in Figures 3A-3B and 4A-4B. An OBD interface is shown at 1120, and may take any suitable form for interacting with the vehicle OBD, including wireless (WiFi, cellular, Bluetooth, etc.), USB, ethernet, etc. A communications system is provided as well, at 1130, and may be coupled such as by WiFi, Bluetooth, ethernet, cellular connection, etc. to a network, whether the internet or an intranet or dedicated communications to a remote server for updating the stored diagnostic tool information/code, as needed. Blocks 1120 and 1130 may be consolidated into a single communications block, if desired. The CPU stores instruction sets and data for the diagnostic tool in memory 1140. In addition, when the OBD interface 1120 receives data from a vehicle, that data may be temporarily or permanently stored in the memory 1140 and or communicated using block 1130 to the remote server, as desired. The memory 1140 may take any suitable form, including for example, Flash, ROM, RAM, removeable memory, etc.

Some examples may comprise a diagnostics tool may operate in accordance with stored instruction sets accessible to the CPU, such as stored in ROM, RAM, Flash, or other memory circuitry, or accessible via online access. The diagnostics tool may operate in accordance with instructions from a remote server, and may be an interface to the remote server, in some examples. The instruction sets operable by the diagnostics tool (or remote server using the diagnostics tool as a user interface) may be operable to receive a set of operational symptoms. Such symptoms may be received in the form of DTCs downloaded from a vehicle via the OBD interface 1120, for example. The instruction sets operable by the diagnostics tool (or remote server using the diagnostics tool as a user interface) may be operable to filter possible failure modes using the set of operational symptoms. For example, stored information loaded by the diagnostics tool / remote server from a fault model editor may include linkages between operational symptoms, including but not limited to DTCs, and particular failure modes. Such linkages may comprise likelihood ratings, such as a likelihood between 0 and 1, or between 0% and 100%, for example. Failure modes having no linkage to the received operational symptoms can be eliminated from an ongoing diagnostics operation. The remaining operational symptoms may be ordered in accordance with the likelihood of occurrence based on the received operational symptoms. Likelihood for a particular one of the failure modes may be rated in various ways, such as by, for example and without limitation, determining a product or average of a plurality of likelihood scores associated with the received operational symptoms. In an example, which is non-limiting, reference can be made to Figure 5. Assuming that both Symptom 1 and Symptom 2 (DTCs 1 and 2, at 512, 514) are present, the likelihoods for FM1 to FM5 may be calculated using the scores for each then present DTC, such as by stating that Likelihood = 1-(1-L1)*(1-L2)... where L1 and L2 are the likelihoods for each present DTC. The "Likelihood" need not be strictly mathematically accurate, but is provided as an indicator to the user (a field technician, for example) of the general confidence level in the tests to be performed. Using the above calculation, for example:

    FM1: 1-(1-0.9)*(1-0.1) = 0.91 = 91%
    FM2: 1-(1-0.9)*(1-0.5) = 0.95 = 95%
    FM3: 1-(1-0.5)*(1-1.0) = 0.50 = 50%
    FM4: 1-(1-0.5)*(1-1.0) = 0.50 = 50%
    FM5: 1-(1-0.1)*(1-1.0) = 0.10 = 10%

Using this example, then, the diagnostic tool will generate and ordered set of diagnostic symptoms based on these possible failure modes, wherein the ordered set of diagnostic symptoms identifies which one or ones of a set of available diagnostic tests are most likely to identify a true rood cause of the set of operational symptoms. Applying the method to the illustrative example of Figure 5, Test 1 518, and Test 2, 520, can then be identified and displayed to the user as the likely tests. The order in which the tests are presented may be according to the most likely failure mode, or according to test that is most likely to yield a determinative result, or according to the costs of the tests, or a blend of such factors. For example, assuming in the example of Figure 5 that Test 1 is relatively low cost and simple, and Test 2 is higher cost and more complex, Test 1 may be listed first and Test 2 listed second. Alternatively, given that Test 1 does not align with the most likely failure mode according to the set of DTCs that were received, Test 2 may instead be listed first. Both tests may be presented, or a single test may be presented. More than two tests may be presented, if desired.

Turning back to Figure 11, presentation of the tests may be performed via a user interface 1110. Figures 3A and 4A show illustrative examples of such presentation. Additional data, including the DTCs and possible corrective actions (and related root causes) may be presented in via the user interface 1110, as illustrated in Figures 3A and 4A. The diagnostic tool may be further configured to receive user inputs via the user interface 1110 indicating that a diagnostic test or tests has been performed, as well as allowing the user to input the result of such tests. Alternatively, in some examples, the OBD Interface 1120 may be used to communicate a test to be performed to the vehicle, automatically or responsive to a user input via the user interface 1110, where such a test can be performed by the vehicle, and the test result can be returned via the OBD interface. In still other examples, a user action may be performed on the vehicle, resulting in new OBD data in the vehicle, and the test result, or data related to the test, can be read out via the OBD interface by the diagnostic tool.

After the diagnostic test is performed and the diagnostic tool receives the test results, the presented data is modified and updated in view of the test results, as shown, for example, in Figures 3B and 4B. Depending on the test results, the root cause and an associated corrective action recommendation may be presented to the user, or, if the test does not confirm a particular root cause, the set of most likely potential root causes can be adjusted, and an updated set of data is presented. The updated data may, for example, identify a further diagnostic test to perform. Updated data may also present new likelihoods for the further diagnostic test to succeed in identifying a root cause, and/or may present a modified set of potential root causes and associated likelihoods, as desired.

Each of these non-limiting examples can stand on its own, or can be combined in various permutations or combinations with one or more of the other examples.

The above detailed description includes references to the accompanying drawings, which form a part of the detailed description. The drawings show, by way of illustration, specific embodiments. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." Moreover, in the claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic or optical disks, magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description.

The Abstract is provided to comply with 37 C.F.R. §1.72(b), to allow the reader to quickly ascertain the nature of the technical disclosure. It is submitted with the understanding that it will not be used to interpret or limit the scope or meaning of the claims.

Also, in the above Detailed Description, various features may be grouped together to streamline the disclosure. This should not be interpreted as intending that an unclaimed disclosed feature is essential to any claim. Rather, innovative subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the protection should be determined with reference to the appended claims, along with the full scope of equivalents to which such claims are entitled.

**Claims**

1. A method for editing and using a fault model for an operational system comprising a plurality of components and actuators, the method comprising editing the fault model by:

   displaying to an operator a fault table linking failure modes, operational symptoms, diagnostic tests linked to diagnostic symptoms, and corrective actions, based on a background database of failure modes, operational symptoms, diagnostic symptoms, and likelihoods of the fault modes for each combination of operational symptoms and diagnostic symptoms;
   receiving from the operator a command to modify the fault table to update one or more of the likelihoods;
   updating the background database on which the fault table is based;
   generating and displaying an updated fault table to the operator;
   updating a diagnostic tool using the updated background database; and
   using the updated diagnostic tool by:

   receiving a set of operational symptoms;
   filtering possible failure modes using the set of operational symptoms;
   generating an ordered set of diagnostic symptoms based on the filtered possible failure modes, wherein the ordered set of diagnostic symptoms indicates which one or ones of a set of diagnostic tests are most likely to identify a true root cause of the set of operational symptoms; and
   displaying, to a user, the diagnostic test or tests likely to narrow the filtered possible failure modes to aid in identifying the true root cause.

2. The method of claim 1 wherein the step of displaying to an operator a fault table is performed by showing a table having rows each corresponding to a failure mode, a first set of columns related to diagnostic trouble codes (DTCs) that can be generated by a vehicle, a second set of columns related to diagnostic tests that can be performed on a vehicle, and a column designating corrective action corresponding to the failure mode column, wherein cells of the table in the first and second sets of columns include visual indicia of a likelihood of correlation between a respective DTC or diagnostic test and the failure mode of a particular row.

3. The method of claim 2, wherein the visual indicia include at least three color coded degrees of correlation.

4. The method of claim 2 or 3, wherein receiving from the operator a command to modify the fault table comprises receiving a command to modify a likelihood in a cell of a particular row and column, and / or
   wherein receiving from the operator a command to modify the fault table comprises receiving a command to add or delete a column or a row.

5. The method of any preceding claim, further comprising:
   receiving an indication of a diagnostic test performed by the user and a result of the diagnostic test performed by the user; and either:

   identifying a next diagnostic test to the user, or
   identifying a root cause and corrective action to the user.

6. The method of any preceding claim, wherein the operational system is a vehicle.

7. The method of any preceding claim, wherein the step of displaying to an operator a fault table is performed according to a user selectable display mode, in which:

   a first user selectable display mode comprises displaying failure modes in a first column, and displaying operational symptoms and diagnostic tests linked to diagnostic symptoms in second and subsequent columns, by showing in each cell a correlation or likelihood relating the displayed operational symptoms and diagnostic tests for each failure mode; and
   a second user selectable display mode comprises displaying operational symptoms in a first column, and displaying failure modes in second and subsequent columns, by showing in each cell a correlation or likelihood relating the failure modes for each operational symptom, and / or

   wherein the operational symptoms are diagnostic trouble codes (DTCs).

8. A system configured for developing and using a fault model for an operational plant comprising a plurality of components and actuators, the system comprising:

a stored instruction set for a fault model editor configured to:

display to an operator a fault table linking failure modes, operational symptoms, diagnostic tests linked to diagnostic symptoms, and corrective actions, based on a background database of failure modes, operational symptoms, diagnostic symptoms, and likelihoods of the failure modes for each combination of operational symptoms and diagnostic symptoms;
receive from the operator a command to modify the fault table to update one or more of the likelihoods;
update the background database on which the fault table is based with the updated likelihood; and
generate and display an updated fault table to the operator;

a stored instruction set for a diagnostic tool updater configured to convert the background database, as updated by the fault model editor including the updated fault table, to a diagnostic tool data set;
a stored instruction set for a diagnostic tool configured to:

receive a set of operational symptoms from a user;
filter a set of potential root causes using the set of operational symptoms; and
using the likelihoods of the failure modes, generate an ordered set of diagnostic symptoms based on the operational symptoms, wherein the ordered set of diagnostic symptoms indicates which one or ones of a set of diagnostic tests are most likely to identify a true root cause of the set of operational symptoms; and
display, to the user, the diagnostic test or tests likely to narrow a set of possible root causes based on the operational symptoms to aid in identifying the true root cause.

9. The system of claim 8, wherein the stored instruction set for the fault model editor is configured to display the fault table by showing a table having rows each corresponding to a failure mode, a first set of columns related to diagnostic trouble codes (DTCs) that can be generated by a vehicle, a second set of columns related to diagnostic tests that can be performed on a vehicle, and a column designating corrective action corresponding to the failure mode column, wherein cells of the table in the first and second sets of columns include visual indicia of a likelihood of correlation between a respective DTC or diagnostic test and the failure mode of a particular row.

10. The system of claim 9, wherein the visual indicia include at least three color coded degrees of correlation.

11. The system of claim 9 or 10, wherein the stored instruction set for a fault model editor is configured to receive the command to modify the fault table by receiving a command to modify a likelihood in a cell of a particular row and column, and /or wherein the stored instruction set for a fault model editor is configured to receive the command to modify the fault table by receiving a command to add or delete a column or a row.

12. The system of claim 8, 9, 10 or 11, wherein the stored instruction set for the diagnostic tool is configured to:
receive an indication of a diagnostic test performed by the user and a result of the diagnostic test performed by the user; and either:

identify a next diagnostic test to the user, or
identify a root cause and corrective action to the user.

13. The system of claim 8, 9, 10, 11 or 12, wherein the operational plant is a vehicle.

14. The system of claim 8, 9, 10, 11, 12 or 13, wherein the stored instruction set for the fault model editor is configured to allow a user selectable display mode, in which:

a first user selectable display mode displays failure modes in a first column, and display operational symptoms and diagnostic tests linked to diagnostic symptoms in second and subsequent columns, by showing in each cell a correlation or likelihood relating the displayed operational symptoms and diagnostic tests for each failure mode; and
a second user selectable display mode displays operational symptoms in a first column, and displays failure modes in second and subsequent columns, by showing in each cell a correlation or likelihood relating the failure modes for each operational symptom, and / or wherein the operational symptoms are diagnostic trouble codes (DTCs).

**15.** A method for editing and using a fault model for an operational system comprising a plurality of components and actuators, the method comprising editing the fault model by:

displaying to an operator a fault table linking failure modes, operational symptoms, diagnostic tests linked to diagnostic symptoms, and corrective actions, based on a background database of failure modes, operational symptoms, diagnostic symptoms, and likelihoods of the fault modes for each combination of operational symptoms and diagnostic symptoms;
receiving from the operator a command to modify the fault table to update one or more of the likelihoods;
updating the background database on which the fault table is based; and
generating and displaying an updated fault table to the operator;
wherein the method further comprises generating a diagnostic tool data file using the updated background database in which a set of diagnostic trouble codes (DTCs) for the operational system are identified and linked to potential failure modes by likelihoods of association between the DTCs and the potential failure modes, with a set of diagnostic tests linked to the potential failure modes for use by the diagnostic tool to parse DTCs and potential failure modes, wherein, optionally,

the step of displaying to an operator a fault table is performed by showing a table having rows each corresponding to a failure mode, a first set of columns related to diagnostic trouble codes (DTCs) that can be generated by a vehicle, a second set of columns related to diagnostic tests that can be performed on a vehicle, and a column designating corrective action corresponding to the failure mode column, wherein cells of the table in the first and second sets of columns include visual indicia of a likelihood of correlation between a respective DTC or diagnostic test and the failure mode of a particular row.

Fig. 1

Fig. 2

## Initiating Conditions

| | |
|---|---|
| DTC A | {Description} |
| DTC B | {Description} |
| DTC C | {Description} |

300

## Tests 310

| | | | | |
|---|---|---|---|---|
| Benefit Score | Test 1 {Description} | Cost | Not Performed | Details |

| | | | | |
|---|---|---|---|---|
| Benefit Score | Test 2 {Description} | Cost | Not Performed | Details |

| | | | | |
|---|---|---|---|---|
| Benefit Score | Test 3 {Description} | Cost | Not Performed | Details |

## Corrective Actions 320

| | | | | |
|---|---|---|---|---|
| Benefit Score | Action 1 {Description} | Likelihood | Not Performed | Details |

| | | | | |
|---|---|---|---|---|
| Benefit Score | Action 2 {Description} | Likelihood | Not Performed | Details |

# Fig. 3A

## Initiating Conditions

| | |
|---|---|
| DTC A | {Description} |
| DTC B | {Description} |
| DTC C | {Description} |

300

## Tests

310

312

| Benefit Score | Test 1 {Description} | Performed; Problem Found | Details |
|---|---|---|---|

## Corrective Actions

320

322

324

| 100% | Action 2 {Description} | 100% | Not Performed | Details |
|---|---|---|---|---|

# Fig. 3B

EP 4 167 040 A1

## Initiating Conditions

| | |
|---|---|
| DTC 362 | A/T 1 – Diesel Exhaust Fluid Dosing Unit |
| DTC 374 | A/T 1 – DEF Pump Motor Speed Current Low |
| DTC 337 | A/T 1 – DEF Temperature Sensor Abnormal |

400

## Tests — 410

| Benefit 100% | Inspect DEF Pump Harness | Not Performed | Details |
|---|---|---|---|
| Benefit 80% | Check Restriction in DEF Pump | Not Performed | Details |
| Benefit 60% | Verify DEF Pump Dosing | Not Performed | Details |

## Corrective Actions — 420

| Benefit 70% | Replace DEF Pump | 54% Likely | Not Performed | Details |
|---|---|---|---|---|
| Benefit 50% | Replace DEF Pump & Harness | 46% Likely | Not Performed | Details |

## Fig. 4A

EP 4 167 040 A1

## Initiating Conditions

| | | |
|---|---|---|
| DTC 362 | A/T 1 – Diesel Exhaust Fluid Dosing Unit | |
| DTC 374 | A/T 1 DEF Pump Motor Speed Current Low | 400 |
| DTC 337 | A/T 1 – DEF Temperature Sensor Abnormal | |

## Tests 410

| Benefit 100% | Inspect DEF Pump Harness | Performed: DEF Pump Connector Contaminated 412 |
|---|---|---|

## Corrective Actions 420

| Benefit 100% | Replace DEF Pump & Harness 422 | 100% | Not Performed | Details |
|---|---|---|---|---|

# Fig. 4B

| | DTC 1 | DTC 2 | DTC 3 | Test 1 | Test 2 | Test 3 | | | |
|---|---|---|---|---|---|---|---|---|---|
| | Sym 1 | Sym 2 | Sym 3 | Sym 4 | Sym 5 | Sym 6 | Sym 7 | Sym 8 | |
| FM 1 | 0.9 | 0.1 | | 1 | | | | | CA 1 |
| FM 2 | 0.9 | 0.5 | | | 0.5 | | | | CA 2 |
| FM 3 | 0.5 | | 0.9 | | | 0.5 | | | |
| FM 4 | 0.5 | | 0.1 | | | | 1 | | CA 3 |
| FM 5 | 0.1 | | 0.5 | | | | | 1 | CA 4 |

Select FM   Filter Using FM   Merge

Fig. 5

Fig. 6

EP 4 167 040 A1

<table>
<tr><td></td><td colspan="2">Component 1<br>710</td><td colspan="2">Component 2<br>712</td><td>Component 3<br>714</td></tr>
<tr><td>720</td><td>FM1</td><td>FM2</td><td>FM3</td><td>FM4</td><td>FM5</td></tr>
<tr><td>DTC1 730</td><td>1</td><td>1</td><td>0</td><td>0</td><td>1</td></tr>
<tr><td>DTC2 732</td><td>1</td><td>0</td><td>1</td><td>0</td><td>0</td></tr>
<tr><td>DTC3 734</td><td>0</td><td>1</td><td>1</td><td>1</td><td>0</td></tr>
<tr><td>Data1 740</td><td>X</td><td>X</td><td>-</td><td>-</td><td>-</td></tr>
<tr><td>Data2 742</td><td>-</td><td>-</td><td>Y</td><td>Y</td><td>-</td></tr>
<tr><td>Test1 750</td><td>A</td><td>Not A</td><td>Not A</td><td>A</td><td>A</td></tr>
<tr><td>Test2 752</td><td>Not B</td><td>B</td><td>Not B</td><td>B</td><td>n/a</td></tr>
</table>

700

Fig. 7

800 — Present Fault Model

810 — Operator Input

812 — Modify Fault Model

820 — Update Fault Model Database

830 — End Editing

840 — Update Diagnostic Tool

Fig. 8A

Fig. 8B

Fig. 8C

Fig. 9

Fig. 10

Fig. 11

Europäisches
Patentamt
European
Patent Office
Office européen
des brevets

# EUROPEAN SEARCH REPORT

**Application Number**

EP 22 18 8547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/185093 A1 (WITTLIFF III WILLIAM W [US] ET AL) 18 July 2013 (2013-07-18)<br>* paragraph [0035] - paragraph [0037]; figure 1 *<br>* paragraph [0041] - paragraph [0045]; figure 2 *<br>* paragraph [0095]; figure 2 *<br>* paragraph [0161] - paragraph [0188]; figure 1 *<br>* paragraph [0191] - paragraph [0195]; figure 10 and 12 *<br>* paragraph [0199] *<br>* paragraph [0203] - paragraph [0204]; figure 12 * | 1-15 | INV.<br>G05B23/02<br>G06F11/07<br>G06N7/01 |
| A | US 2019/228322 A1 (WENNER JENNIFER [US] ET AL) 25 July 2019 (2019-07-25)<br>* paragraph [0056] - paragraph [0072]; figures 5, 6A-C * | 1-15 | |
| A | US 2006/095230 A1 (GRIER JEFF [US] ET AL) 4 May 2006 (2006-05-04)<br>* paragraph [0057] - paragraph [0061]; figure 4 *<br>* paragraph [0065]; figure 5 * | 1-15 | TECHNICAL FIELDS SEARCHED (IPC)<br><br>G05B<br>G06N<br>G06F |

The present search report has been drawn up for all claims

| Place of search | Date of completion of the search | Examiner |
|---|---|---|
| Munich | 28 February 2023 | Bernard, Eddy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 167 040 A1**

## ANNEX TO THE EUROPEAN SEARCH REPORT
## ON EUROPEAN PATENT APPLICATION NO.

EP 22 18 8547

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2023

| Patent document cited in search report | | Publication date | Patent family member(s) | | Publication date |
|---|---|---|---|---|---|
| US 2013185093 | A1 | 18-07-2013 | NONE | | |
| US 2019228322 | A1 | 25-07-2019 | NONE | | |
| US 2006095230 | A1 | 04-05-2006 | US 2006095230 A1 | | 04-05-2006 |
| | | | WO 2006068658 A2 | | 29-06-2006 |

EPO FORM P0459

For more details about this annex : see Official Journal of the European Patent Office, No. 12/82